# EUROPÄISCHE PATENTSCHRIFT

(11) **EP 1 058 803 B1**
(45) Veröffentlichungstag und Bekanntmachung des Hinweises auf die Patenterteilung: **17.07.2002**
(21) Anmeldenummer: 99906234.2
(22) Anmeldetag: 13.02.1999
(51) Int. Cl.: F24D 11/00, F28D 20/02

(54) **WÄRMESPEICHER**
HEAT ACCUMULATOR
ACCUMULATEUR DE CHALEUR

(30) Priorität: 24.02.1998 DE 19807657
(43) Veröffentlichungstag der Anmeldung: 13.12.2000
(73) Patentinhaber: I V T Installations-und Verbindungstechnik Gmbh & Co. Kg, 91126 Schwabach (DE)
(72) Erfinder: HENNIG, Christoph, D-91126 Schwabach (DE); SCHARRER, Jochen, D-92318 Neumarkt (DE); SCHULZ, Bernd, D-74360 Ilsfeld (DE)
(74) Vertreter: Brose, Manfred, Dr.
(86) Internationale Anmeldenummer: EP9900955
(87) Internationale Veröffentlichungsnummer: WO9943988

(56) Entgegenhaltungen:
- WO-A-97/41395
- DE-U- 9 315 785
- DE-U- 9 418 656
- DE-U- 29 601 783
- US-A- 4 139 055
- US-A- 4 479 487

## Beschreibung

Die Erfindung betrifft einen Wärmespeicher für einen Temperaturbereich von 10 bis 95 Grad Celsius nach dem Oberbegriff von Anspruch 1.

Derartige Wärmespeicher mit einem Wasserspeicher und mindestens einem Wärmetauscher dienen vorzugsweise zur Speicherung der Wärme von Solaranlagen und Wärmepumpen und zur Entnahme der Wärme zum Betrieb einer Raumheizungsanlage und/oder einer Brauchwasseranlage. Diesen Wärmespeichern haftet jedoch der Nachteil an, daß die Rücklauftemperatur besonders für eine Solaranlage zu hoch ist und das Kollektorfeld dadurch mit einem schlechten Wirkungsgrad arbeiten muß.

Der Erfindung liegt daher die Aufgabe zugrunde, einen Wärmespeicher nach dem Oberbegriff von Anspruch 1 so fortzuentwickeln, daß der Rücklauf zur Solaranlage soweit wie möglich in seiner Temperatur abgesenkt wird. nachgeschalteten Wasserspeicher, einem Brauchwasser-Wärmetauscher im NT-Wärmespeicher, dessen Zulauf im NT-Wärmespeicher mit der Frischwasserleitung verbunden ist zur Vorwärmung des Frischwassers durch den NT-Wärmespeicher und eine Solarkollektoranlage mit einem Wärmetauscher im NT-Wärmespeicher zur Abkühlung der Wärmeträgerflüssigkeit des Kollektorkreislaufes bis zum niedrigstmöglichen Temperaturniveau, wobei der NT-Wärmespeicher ein Latentwärmespeicher ist. Diesem aus der DE-U-9 418 656 bekannten Wärmespeicher haftet der Nachteil an, daß die Speicherkapazität des NT-Wärmespeichers zu gering ist, um einen langzeitlichen Ausgleich zwischen den beiden jeweils unregelmäßig anfallenden Zeiten von Wärmebedarf für das Brauchwasser und Wärmeanfall durch die Solaranlage zu erreichen.

Der Erfindung liegt daher die Aufgabe zugrunde, einen Wärmespeicher nach dem Oberbegriff von Anspruch 1 so fortzuentwickeln, daß ein langzeitlicher Ausgleich zwischen dem Wärmebedarf des Verbrauchers und dem Wärmeanfall durch die Solaranlage erreicht und der Rücklauf zur Solaranlage soweit wie möglich in seiner Temperatur abgesenkt wird.

Diese Aufgabe wird nach der Erfindung dadurch gelöst, daß der Brauchwasserwärmetauscher durch den Wasserspeicher und den NT-Latentwärmespeicher verläuft und die Solaranlage zwei hydraulisch in Reihe geschaltete Wärmetauscher hat, wobei: der erste Wärmetauscher im unteren Teil des Wasserspeichers und der zweite Wärmetauscher im NT-Latentwärmespeicher angeordnet ist und der Vorlauf des ersten Wärmetauschers mit dem Kollektor-Vorlauf und der Rücklauf des zweiten Wärmetauschers verbunden ist. Durch diese Schaltung wird ein optimaler Ausgleich zwischen Wärmebedarf und Wärmeanfall auf dem niedrigstmöglichen Temperaturniveau erreicht.

In den Unteransprüchen werden Fortbildungen und Ausgestaltungen der in Anspruch 1 beschriebenen Erfindung beansprucht.

In den Zeichnungen sind Ausführungsbeispiele der Erfindung wiedergegeben. Es zeigen :
- Fig. 1: einen senkrechten Schnitt durch den Wärmespeicher mit integriertem Heizkessel und
- Fig. 2: einen senkrechten Schnitt durch einen Wärmespeicher mit getrenntem Heizkessel.

Der Wärmespeicher 1 kann Wärme in einem Temperaturbereich von 10 bis 95 Grad CeLsius speichern. Die Wärme kann von einer Solaranlage 5, einer Wärmepumpe oder einem Heizkessel 6 zur Verfügung gestellt werden. Sie kann dann dem Wärmespeicher 1 zum Betrieb einer Raumheizungsanlage 11, 12 und/oder einer Brauchwasseranlage 13, 14, 15 wieder entnommen werden. Die Raumheizungsanlage hat in bekannter Weise einen Vorlauf 11 und einen Rücklauf 12 und die Brauchwasseranlage eine Frischwasserleitung 13, eine Brauchwasserleitung 14 zu den Zapfstellen und eine Zirkulationsleitung 15. Sowohl im Vorlauf 11 der Raumheizungsanlage als auch in der Brauchwasserleitung 14 wird die Wassertemperatur durch einen Dreiweghahn geregelt.

Der Wärmespeicher 1 besteht aus einem Niedertemperatur (NT)-Latentwärmespeicher 2, einem nachgeschalteten Wasserspeicher 3 und eventuell aus einem weiteren nachgeschalteten Hochtemperatur (HT)-Latentwärmespeicher 4, die auch in Modulbauweise aus einzelnen trennbaren Einheiten bestehen können. In dem NT-Latentwärmespeicher 2 befindet sich ein Wärmetauscher 21 und im Wasserspeicher 3 ein Wärmetauscher 31. Beide Wärmetauscher 21, 31 sind hydraulisch hintereinander geschaltet und bilden eine Einheit. Für jeweils einen zweiten Wärmetauscher 22 im NT-Latentwärmespeicher 2 und einen Wärmespeicher 32 im Wasserspeicher 3 gilt das Gleiche. Auch diese beiden Wärmetauscher 22, 32 sind hintereinander geschaltet und bilden hydraulisch eine Einheit. Der Wasserspeicher 3 ist als Schichtenspeicher mit Leitblechen 33 ausgebildet, wobei die Leitbleche 33 die Temperaturschichtung im Speicher 3 unterstützen.

Die Frischwasserleitung 13 ist mit dem ersten Wärmetauscher 21 verbunden. Das kalte Frischwasser durchläuft daher zuerst den NT-Latentwärmespeicher 2 und es würde diesen, wenn keine Wärmezufuhr erfolgen würde, auf das niedrige Temperaturniveau des Frischwassers von etwa 15 Grad Celsius abkühlen.

Dem Wärmespeicher 1 wird jedoch von einer Wärmequelle, beispielsweise einer Solarkollektoranlage 5, Wärme zugeführt. Der Kollektorvorlauf 51 ist mit dem Eingang des zweiten Wärmetauschers 32 des Wasserspeichers 3 und der Kollektorrücklauf 52 mit dem Ausgang des zweiten Wärmetauschers 22 im NT-Latentwärmespeicher 2 verbunden. Das bedeutet, daß die solarerwärmte Wärmeträgerflüssigkeit des Kollektorkreislaufes zuerst ihre Wärme im Wasserspeicher 3 in einem mittleren Temperaturbereich von 20 bis 60 Grad Celsius abgibt und sodann noch durch den NT-Latentwärmespeicher 2 fließt, wo sie ihre Restwärme bei einem niedrigen Temperaturniveau von etwa 15 bis 25 Grad Celsius abgibt. Hierdurch wird nun der NT-Latentwärmespeicher 2 und damit das durch den ersten Wärmetauscher 21 fließende Frischwasser aufgeheizt. Ein Latentwärmespeicher 2 mit einer hohen Speicherkapazität ist an dieser Stelle deshalb notwendig, weil die Restwärme am Tage nur in einem begrenzten Zeitraum anfällt, während der Zeitraum, in dem Frischwasser vorgewärmt werden muß, sehr viel größer ist. Durch den NT-Latentwärmespeicher 2 ist gewährleistet, daß der Solarrücklauf sich gleichfalls auf einem sehr niedrigen Temperaturniveau befindet, wodurch der Wirkungsgrad der Solaranlage 5 beträchtlich erhöht wird.

Der HT-Latentwärmespeicher 4 dient zur eventuell notwendigen Nachheizung des Wärmespeichers 1 durch einen integrierten Heizkessel 6. Um einen energiesparenden Betrieb des Brenners zu gewährleisten, sollte dieser möglichst wenige Zündphasen (geringes "takten") mit möglichst langen Brennerlaufzeiten aufweisen, um einen guten Wirkungsgrad und einen geringen Schadstoffausstoß zu erzielen. Hierfür ist der HT-Latentwärmespeicher 4 mit einer großen Wärmekapazität besonders gut geeignet. In ihm kann die Wärme in einem Temperaturbereich von 50 bis 95 Grad Celsius gespeichert werden.

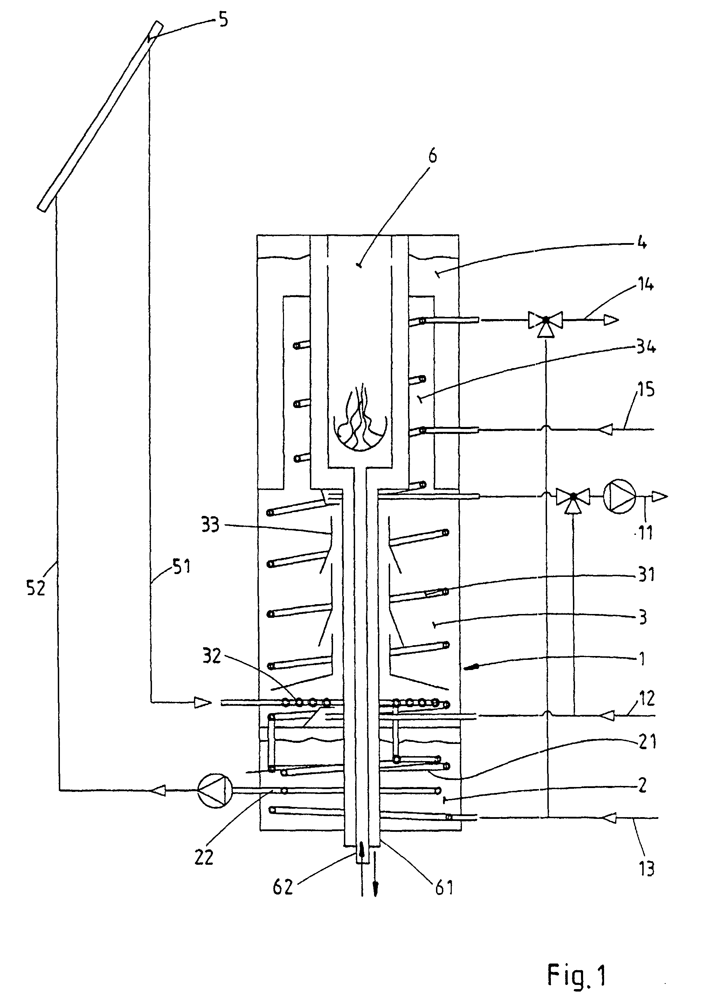

In Figur 1 ist ein Wärmespeicher 1 mit einem Heizkessel 6 in Sturzbauweise dargestellt, der in dem HT-Latentwärmespeicher 4 integriert ist. Durch ein Doppelrohr 61, 62 wird dem Heizkessel 6 Frischluft zu- und das Abgas abgeleitet. Das Doppelrohr 61, 62 verläuft vom Heizkessel 6 im HT-Latentwärmespeicher 4 durch den Wasserspeicher 3 und den NT-Latentwärmespeicher 2 hindurch ins Freie. Hierbei strömt das Abgas durch den im Querschnitt ringförmigen Raum zwischen den beiden Rohren 61, 62, während die Frischluft im inneren Rohr 62 zum Heizkessel 6 strömt. Durch die heißen Abgase wird daher die kalte Frischluft im Rohr 62 vorgewärmt. Außerdem geben die Abgase ihre Wärme der Reihe nach zuerst an den HT-Latentwärmespeicher 4, dann an den Wasserspeicher 3 und schließlich an den NT-Latentwärmespeicher 2 ab, wobei bei Unterschreiten der Temperatur von 100 Grad Celsius der Wasserdampf kondensiert und die Kondensationswärme abgibt ("Brennwerttechnik")

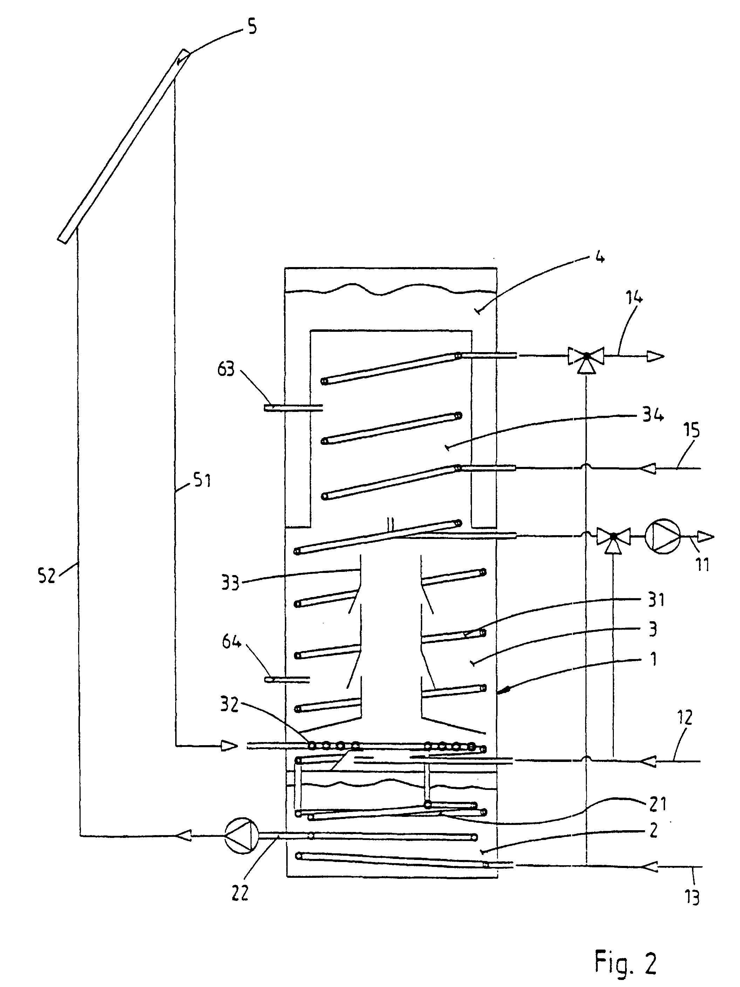

Der in Figur 1 dargestellte Wärmespeicher 1 mit integriertem Heizkessel 6 in Sturzbauweise stellt nur eine bevorzugte Ausführungsform dar. Es ist aber auch ohne weiteres möglich, den Wärmespeicher 1 mit einem nebengestellten Heizkessel zu betreiben, wie dieses in Figur 2 dargestellt ist. Dieses hat jedoch den Nachteil, daß die Brennwerttechnik bei einem nebengestellten Heizkessel nicht oder nur mit größerem technischen Aufwand verwirklicht werden kann. Der Heizkessel wird an dem Kessel-Vorlaufanschluß 63 und an dem Kessel-Rücklaufanschluß 64 angeschlossen.

Die in den Figuren 1 und 2 wiedergegebene Konstruktion des HT-Latentwärmespeichers 4, der den oberen Teil 34 des Wasserspeichers 3 mantelförmig umgibt, hat den Vorteil, daß eine konstruktive Brauchwasservorrangschaltung gegeben ist, da der obere Wasserspeicherteil 34 automatisch als erster durch den Heizkessel erwärmt wird und der Heizungsvorlauf 11 unten im relativ kälteren Temperaturbereich Liegt.

Ein weiterer Vorteil dieser Konstruktion besteht darin, daß für den Wärmeübergang vom oberen Wasserspeicherteil 34 zum HT-Latentwärmespeicher 4 eine größere Wärmetauscherfläche zur Verfügung steht, als dieses beispielsweise bei einer Heizschlange der Fall wäre.

### Bezugszeichenliste

- 1: Wärmespeicher
- 11: Heizungsvorlauf
- 12: Heizungsrücklauf
- 13: Frischwasserleitung
- 14: Brauchwasserleitung
- 15: Zirkulationsleitung
- 2: Niedertemperatur (NT)-Latentwärmespeicher
- 21: Wärmetauscher
- 22: Wärmetauscher
- 3: Wasserspeicher
- 31: Wärmetauscher
- 32: Wärmetauscher
- 33: Leitbleche
- 34: oberer Wasserspeicherteil
- 4: Hochtemperatur (HT)-Latentwärmespeicher
- 5: Solarkollektoranlage
- 51: Kollektor-Vorlauf
- 52: Kollektor-Rücklauf
- 6: Heizkessel
- 61: Abgasrohr
- 62: Frischluftrohr
- 63: Kesselvorlauf
- 64: Kesselrücklauf

## Patentansprüche

1. Wärmespeicher (1) für einen Temperaturbereich von etwa 10 bis 95 Grad Celsius, in Solaranlagen (5), Wärmepumpen, Heizkessel, zur Entnahme von Wärme zum Betrieb einer Raumheizungsanlage (11, 12) und/oder einer Brauchwasseranlage (13, 14) mit einem Niedertemperatur (NT)-Wärmespeicher (2) und einem nachgeschalteten Wasserspeicher (3), einem Brauchwasser-Wärmetauscher (21) im NT-Wärmespeicher (2), dessen Zulauf im NT-Wärmespeicher (2) mit der Frischwasserleitung (13) verbunden ist zur Vorwärmung des Frischwassers durch den NT-Wärmespeicher (2) und eine Solarkollektoranlage (5) mit einem Wärmetauscher (22) im NT-Wärmespeicher (2) zur Abkühlung der Wärmeträgerflüssigkeit des Kollektorkreislaufes bis zum niedrigstmöglichen Temperaturniveau, wobei der NT-Wärmespeicher (2) ein Latentwärmespeicher ist,
**dadurch gekennzeichnet, daß**
der Brauchwasserwärmetauscher (31) durch den Wasserspeicher (3) und den NT-Latentwärmespeicher (2) verläuft und die Solaranlage (5) zwei hydraulisch in Reihe geschaltete Wärmetauscher (32, 22) hat, wobei sich der erste Wärmetauscher (32) im unteren Teil des Wasserspeichers (3) und der zweite Wärmetauscher (22) im NT-Latentwärmespeicher (2) befindet und der Vorlauf des ersten Wärmetauschers (32) mit dem Kollektor-Vorlauf (51) und der Rücklauf des zweiten Wärmetauschers (22) mit dem Kollektor-Rücklauf (52) verbunden sind.

2. Wärmespeicher nach Anspruch 1, **dadurch gekennzeichnet, daß** der Wasserspeicher (3) als Schichtenspeicher ausgebildet ist.

3. Wärmespeicher nach Anspruch 2, **gekennzeichnet durch** Leitbleche (33) zur Unterstützung der Schichtung der zuund abfließenden Wasserströme im Wasserspeicher (3).

4. Wärmespeicher nach einem der Ansprüche 1 bis 3, **dadurch gekennzeichnet, daß** der NT-Latentwärmespeicher (2) mit dem Abgaswärmetauscher eines Heizkessels (6) verbunden ist.

5. Wärmespeicher nach einem der Ansprüche 1 bis 4, **dadurch gekennzeichnet, daß** der Wasserspeicher (3) mit dem Abgaswärmetauscher eines Heizkessels (6) verbunden ist.

6. Wärmespeicher nach einem der Ansprüche 1 bis 5, **gekennzeichnet durch** einen dem Wasserspeicher (3) nachgeschaltenten Hochtemperatur (HT)-Latentwärmespeicher (4).

7. Wärmespeicher nach einem der Ansprüche 1 bis 6, **dadurch gekennzeichnet, daß** der Heizkessel (6) im HT-Latentwärmespeicher (4) eingebaut ist.

8. Wärmespeicher nach Anspruch 7, **gekennzeichnet durch** ein Doppelrohr (61, 62) für die Zuluft und das Abgas des Heizkessels (6), wobei im Gegenstrom das Abgas zwischen den beiden Rohren (61, 62) und die Zuluft im inneren Rohr (62) strömt und wobei das Doppelrohr (61, 62) erst **durch** den Wasserspeicher (3) und anschließend **durch** den NT-Latentwärmespeicher (2) verläuft.

9. Wärmespeicher nach einem der Ansprüche 6 bis 8, **dadurch gekennzeichnet, daß** der HT-Latentwärmespeicher (4) den oberen Teil (34) des Wasserspeichers (3) mantelförmig umgibt.

## Claims

1. Heat store (1) for a temperature range of approximately 10 to 95 degrees Celsius, in solar installations (5), heat pumps and heating boilers, for extraction of heat for operation of a room heating installation (11, 12) and/or a service water installation (13, 14), with a low-temperature (LT) heat store (2) and a downstream heat store (3), a service water heat exchanger (21) in the LT heat store (2), the feed of which in the LT heat store (2) is connected with the fresh water duct (13) for the preheating of the fresh water by the LT heat store (2) and a solar collector installation (5) with a heat exchanger (22) in the LT heat store (2) for cooling the heat carrier liquid of the collector circuit to the lowest possible temperature level, wherein the LT heat store (2) is a latent heat store, **characterised in that** the service water heat exchanger (31) runs through the water store (3) and the LT latent heat exchanger (2) and the solar installation (5) has two heat exchangers (32, 22) hydraulically connected in series, wherein the first heat exchanger (32) is disposed in the lower part of the heat store (3) and the second heat exchanger (22) in the NT latent heat exchanger (2) and the feed of the first heat exchanger (32) is connected with the collector feed (51) and the return of the second heat exchanger (22) with the collector return (52).

2. Heat exchanger according to claim 1, **characterised in that** the water store (13) is constructed as a stratified store.

3. Heat exchanger according to claim 2, **characterised by** guide plates (33) for assisting the stratification of the inflowing and outflowing water flows in the water store (3).

4. Heat exchanger according to one of claims 1 to 3, **characterised in that** the LT latent heat store (2) is connected with the waste gas heat exchanger of a heating boiler (6).

5. Heat exchanger according to one of claims 1 to 4, **characterised in that** the water store (3) is connected with the waste gas heat exchanger of a heating boiler (6).

6. Heat exchanger according to one of claims 1 to 5, **characterised by** a high-temperature (HT) latent heat store (4) connected downstream of the water store (3).

7. Heat exchanger according to one of claims 1 to 6, **characterised in that** the heating boiler (6) is incorporated in the HT latent heat store (4).

8. Heat store according to claim 7, **characterised by** a double pipe (61, 62) for the feed air and exhaust gas of the heating boiler (6), wherein the exhaust gas flows in counterflow between the two pipes (61, 62) and the feed air flows in the inner pipe (62) and wherein the double pipe (61, 62) runs firstly through the water store (3) and subsequently through the LT latent heat store (2).

9. Heat store according to one of claims 6 to 8, **characterised in that** the HT latent heat store (4) surrounds the upper part (34) of the water store (3) in the manner of a jacket.

## Revendications

1. Accumulateur de chaleur (1) pour une plage de température d'environ 10 à 95 degrés Celsius, dans des installations solaires (5), pompes à chaleur, chaudières, pour prélever de la chaleur pour le fonctionnement d'une installation de chauffage de locaux (11, 12) et/ou d'une installation d'eau sanitaire (13, 14), comprenant un accumulateur de chaleur (2) à basse température (BT) et un réservoir d'eau (3) aval, un échangeur thermique (21) d'eau sanitaire dans l'accumulateur de chaleur BT (2), dont l'arrivée dans l'accumulateur de chaleur BT (2) est raccordée à la conduite d'eau fraîche (13) pour le préchauffage de l'eau fraîche par l'accumulateur de chaleur BT (2) et par une installation à collecteur solaire (5) munie d'un échangeur thermique (22) dans l'accumulateur de chaleur BT (2) pour le refroidissement du liquide caloporteur du circuit du collecteur au niveau de température minimal possible, l'accumulateur de chaleur BT (2) étant un accumulateur à chaleur latente,
**caractérisé en ce que**
l'échangeur thermique (31) d'eau sanitaire s'étend au travers du réservoir d'eau (3) et de l'accumulateur à chaleur latente BT (2), et l'installation solaire (5) présente deux échangeurs thermiques (32, 22) montés hydrauliquement en série, le premier échangeur thermique (32) se situant dans la partie inférieure du réservoir d'eau (3) et le second échangeur thermique (22) se situant dans l'accumulateur à chaleur latente BT (2), et l'aller du premier échangeur thermique (32) étant raccordé à l'aller (51) du collecteur et le retour du second échangeur thermique (22) étant raccordé au retour (52) du collecteur.

2. Accumulateur de chaleur suivant la revendication 1, **caractérisé en ce que** le réservoir d'eau (3) est réalisé sous forme d'accumulateur en couches.

3. Accumulateur de chaleur suivant la revendication 2, **caractérisé par** des chicanes (33) pour favoriser la stratification des flux d'eau d'arrivée et de sortie dans le réservoir d'eau (3).

4. Accumulateur de chaleur suivant l'une des revendications 1 à 3, **caractérisé en ce que** l'accumulateur à chaleur latente BT (2) est raccordé à l'échangeur thermique de gaz brûlés d'une chaudière (6).

5. Accumulateur de chaleur suivant l'une des revendications 1 à 4, **caractérisé en ce que** le réservoir d'eau (3) est raccordé à l'échangeur thermique de gaz brûlés d'une chaudière (6).

6. Accumulateur de chaleur suivant l'une des revendications 1 à 5, **caractérisé par** un accumulateur à chaleur latente (4) à haute température (HT) monté en aval du réservoir d'eau (3).

7. Accumulateur de chaleur suivant l'une des revendications 1 à 6, **caractérisé en ce que** la chaudière (6) est incorporée dans l'accumulateur à chaleur latente HT (4).

8. Accumulateur de chaleur suivant la revendication 7, **caractérisé par** un double conduit (61, 62) pour l'air frais et les gaz brûlés de la chaudière (6), les gaz brûlés circulant entre les deux conduits (61, 62) et l'air frais s'écoulant à contre-courant dans le conduit intérieur (62), et le double conduit (61, 62) s'étendant d'abord au travers du réservoir d'eau (3), puis au travers de l'accumulateur à chaleur latente BT (2).

9. Accumulateur de chaleur suivant l'une des revendications 6 à 8, **caractérisé en ce que** l'accumulateur à chaleur latente HT (4) entoure en forme de chemise la partie supérieure (34) du réservoir d'eau (3).
